# EUROPÄISCHE PATENTANMELDUNG

(11) **EP 4 596 282 A2**
(43) Veröffentlichungstag der Anmeldung: **06.08.2025**
(21) Anmeldenummer: 25184052.6
(22) Anmeldetag: 15.04.2014
(51) Int. Cl.: B60K 5/08

(54) **BETRIEB EINER ANORDNUNG MIT MEHREREN VERBRENNUNGSMOTOREN UND ELEKTRISCHEN MASCHINEN ZUM VERSORGEN EINES SCHIENENFAHRZEUGS MIT ELEKTRISCHER ENERGIE**

(30) Priorität: 18.04.2013 DE 102013207047
(62) Teilanmeldung aus: 23163559.0
(71) Anmelder: Bombardier Transportation GmbH, 10785 Berlin (DE)
(72) Erfinder: Sonnleitner, Werner, 34292 Ahnatal (DE); Buchner, Andreas, 8037 Zürich (CH); Kretz, Michael, 5603 Staufen (CH)
(74) Vertreter: Patentanwälte Bressel und Partner mbB

(57) **Zusammenfassung**

Die Erfindung betrifft eine Anordnung zum Versorgen eines Schienenfahrzeugs mit elektrischer Energie, wobei die Anordnung aufweist:
- zumindest zwei Verbrennungsmotoren (1),
- für die zumindest zwei Verbrennungsmotoren (1) jeweils eine zugeordnete elektrische Maschine (3) zum Erzeugen der elektrischen Energie, wobei die elektrische Maschine (3) mechanisch mit dem Verbrennungsmotor (1) gekoppelt ist, sodass sie bei einem Generator-Betrieb der elektrischen Maschine (3) von dem Verbrennungsmotor (1) angetrieben wird, sodass zumindest eine erste und eine zweite Verbrennungsmotor-Maschinen-Kombination gebildet ist,
- eine gemeinsame Steuerung (17) der Verbrennungsmotor-Maschinen-Kombinationen, wobei die Steuerung (17) ausgestaltet ist, die Verbrennungsmotoren (1) bei Bedarf einzeln zu starten,
- zumindest eine Vorwärmeinrichtung (KUL), die ausgestaltet ist, die Verbrennungsmotoren (1) vor einem Start vorzuwärmen,
- eine Temperatur-Ermittlungseinrichtung (19), die mit den Verbrennungsmotoren (1) thermisch gekoppelt ist und die über eine Signalverbindung mit der Steuerung (17) verbunden ist, um Informationen über Temperaturen der Verbrennungsmotoren (1) an die Steuerung (17) zu übermitteln,
wobei die Steuerung (17) ausgestaltet ist, während eines Betriebes eines der Verbrennungsmotoren (1) einen anderen der Verbrennungsmotoren (1) zu starten, wenn aufgrund einer Abkühlung des anderen Verbrennungsmotors eine von der Temperatur-Ermittlungseinrichtung ermittelte Temperatur des anderen Verbrennungsmotors einen ersten vorgegebenen Temperaturgrenzwert erreicht oder unterschreitet.

Es ist ein Schema vorgegeben, gemäß dem unter Berücksichtigung des momentanen Betriebszustandes der Anordnung mit mehreren Verbrennungsmotoren und unter Berücksichtigung der momentanen Anforderungen an die Anordnung die momentan für die Erzeugung von elektrischer Energie zu nutzenden Verbrennungsmotoren auswählen sind, wobei die Steuerung ausgestaltet ist, wenn Voraussetzungen für den Start eines vor Auskühlung bedrohten Verbrennungsmotors vorliegen, die gemäß dem Schema vorzunehmende Auswahl abzuändern, indem der vor Auskühlung bedrohte Verbrennungsmotor gestartet wird.

## Beschreibung

Die Erfindung betrifft eine Anordnung zum Versorgen eines Schienenfahrzeugs mit elektrischer Energie, wobei die Anordnung zumindest zwei Verbrennungsmotoren aufweist, denen jeweils eine elektrische Maschine zum Erzeugen der elektrischen Energie zugeordnet ist. Die elektrische Maschine ist mechanisch mit dem zugeordneten Verbrennungsmotor gekoppelt, sodass sie bei einem Generator-Betrieb der elektrischen Maschine von dem Verbrennungsmotor angetrieben wird. Der Verbrennungsmotor und die elektrische Maschine bilden eine Verbrennungsmotor-Maschinen-Kombination. Die Erfindung betrifft ferner ein Verfahren zum Betreiben der Anordnung und ein Schienenfahrzeug mit der Anordnung. Ferner betrifft die Erfindung ein Verfahren zur Herstellung der Anordnung und des Schienenfahrzeugs.

Die Anordnung dient insbesondere zum Versorgen von elektrischen Traktionsmotoren in einem Schienenfahrzeug mit elektrischer Energie und optional außerdem zum Versorgen von zusätzlichen elektrischen Hilfsbetrieben für den Betrieb des Schienenfahrzeugs mit elektrischer Energie. Bei dem Schienenfahrzeug handelt es sich z.B. um eine Lokomotive. Die Erfindung ist jedoch nicht darauf beschränkt. Vielmehr kann das Schienenfahrzeug z.B. auch ein Zugverband sein.

Unter Hilfsbetrieben werden Einrichtungen verstanden, die zwar nicht unmittelbar Traktion erzeugen, insbesondere aber für den Fahrbetrieb des Schienenfahrzeugs zwingend erforderlich sein können. Hilfsbetriebe können allgemein dadurch definiert werden, dass sie über einen eigenen Hilfsbetriebe-Wechselrichter oder eine Mehrzahl eigener Hilfsbetriebe-Wechselrichter aus dem üblicherweise vorhandenen Gleichspannungs-Zwischenkreis mit elektrischer Energie versorgt werden. Zu den Hilfsbetrieben gehören z.B. Ventilatoren und andere Kühleinrichtungen, die die Verbrennungsmotoren, die Traktionsmotoren und/oder andere für den Fahrbetrieb erforderliche Einrichtungen (z.B. Stromrichter) kühlen. Ferner ist für den Fahrbetrieb eine Bremsanlage erforderlich und gehören daher Komponenten der Bremsanlage wie Luftkompressor zu den Hilfsbetrieben. Weitere Beispiele für Hilfsbetriebe sind eine Feuerlöscheinrichtung des Schienenfahrzeugs, elektronische Einrichtungen zur Steuerung des Betriebs des Schienenfahrzeugs, Batterieladegeräte, für den Fahrbetrieb zumindest zeitweise erforderliche Heizungen, z.B. Scheibenheizung der Frontscheibe, und/oder Beleuchtungseinrichtung im Fahrerabteil. Optional können von den Hilfsbetrieben elektrische Einrichtungen unterschieden werden, die lediglich für den Komfort von Passagieren zur Verfügung stehen, wie zum Beispiel Leuchten in Fahrzeug-Abteilen. Solche elektrischen Einrichtungen werden üblicherweise in Zügen über die so genannte Zug-Sammelschiene mit elektrischer Energie versorgt. Die Zug-Sammelschiene ist nicht über den Hilfsbetriebe-Wechselrichter oder einen der Hilfsbetriebe-Wechselrichter mit dem Gleichspannungs-Zwischenkreis verbunden, sondern über einen eigenen Wechselrichter.

Es ist bekannt, dass die von den elektrischen Maschinen erzeugte elektrische Energie über zumindest einen Gleichrichter (im Folgenden: Generator-Gleichrichter, da von dem Generator erzeugter Wechselstrom gleichgerichtet wird) in einen Gleichspannungs-Zwischenkreis eingespeist wird. An den Gleichspannungszwischenkreis sind typischerweise mehrere Wechselrichter angeschlossen, die wiederum den Wechselstrom auf dem gewünschten elektrischen Spannungsniveau oder in dem gewünschten elektrischen Spannungsbereich erzeugen, der für die auf der Wechselspannungsseite angeschlossenen Verbraucher und Systeme benötigt wird. Zusätzlich zu den Wechselrichtern können auf deren Gleichspannungsseite Gleichspannungswandler und/oder auf deren Wechselspannungsseite Transformatoren vorgesehen sein, um das Spannungsniveau zu verändern. Auch andere elektrische Konverter können an den Gleichspannungs-Zwischenkreis entweder direkt oder indirekt angeschlossen sein. Ferner können außer den genannten Hilfsbetrieben auch andere elektrische Verbraucher, wie z.B. für den Komfort von Passagieren vorhandene elektrische Einrichtungen wie Licht, Klimaanlage und Informationssysteme, mit elektrischer Energie aus dem Gleichspannungs-Zwischenkreis versorgt werden, z. B. über einen anderen Wechselrichter als die für den Fahrbetrieb erforderlichen Hilfsbetriebe.

Z.B. sind an den Gleichspannungs-Zwischenkreis angeschlossen: eine Mehrzahl von Traktionsmotoren des Schienenfahrzeugs über ein oder mehrere Traktionswechselrichter; eine Zugstromsammelschiene über einen zusätzlichen Konverter oder unmittelbar; für den Fahrbetrieb erforderliche Hilfsbetriebe über einen Hilfsbetriebe-Wechselrichter. Ferner können weitere Konverter an dem Zwischenkreis angeschlossen sein, z.B. zum Zweck der Umsetzung überflüssiger Energie, die beim Bremsen des Schienenfahrzeugs in den Zwischenkreis eingespeist wird, in Wärme. Ein Beispiel einer solchen Anordnung ist in WO 2009/077184 A1 beschrieben.

Die Erfindung betrifft den Fall, dass mehr als ein Verbrennungsmotor vorhanden ist und jeweils zumindest eine elektrische Maschine mit dem Verbrennungsmotor gekoppelt ist. Es ist daher möglich, dass lediglich ein Teil der vorhandenen elektrischen Maschinen elektrische Energie erzeugt, während gleichzeitig ein anderer Teil der elektrischen Maschinen als Motor betrieben wird, insbesondere um den zugeordneten Verbrennungsmotor im Leerlaufbetrieb anzutreiben. Dies hat den Vorteil, dass die Kraftstoffzufuhr zu dem Verbrennungsmotor abgeschaltet werden kann. Alternativ ist es aber auch möglich, dass zumindest einer der Verbrennungsmotoren lediglich bei niedriger Drehzahl läuft und daher von der oder den zugeordneten elektrischen Maschinen lediglich eine geringe elektrische Leistung erzeugt wird, die z.B. nicht oder nicht nennenswert zu der elektrischen Leistung beiträgt, die in den Gleichspannungs-Zwischenkreis eingespeist wird.

Grundsätzlich soll zwischen folgenden Betriebszuständen eines Verbrennungsmotors unterschieden werden:
- Die beweglichen Teile des Verbrennungsmotors bewegen sich nicht. Dieser Zustand wird als der abgeschaltete Zustand bezeichnet. In diesem Zustand wird kein Kraftstoff in die Verbrennungsräume des Motors eingebracht.
- Die beweglichen Teile des Verbrennungsmotors bewegen sich angetrieben durch die elektrische Maschine, die mit dem Motor gekoppelt ist. Auch in diesem Zustand wird kein Kraftstoff in die Verbrennungsräume des Motors eingebracht dieser Zustand wird als Schubabschaltung bezeichnet.
- Der Verbrennungsmotor erzeugt mechanische Leistung. Dementsprechend wird die mit dem Motor gekoppelte elektrische Maschine angetrieben und erzeugt elektrische Energie. In diesem Zustand wird Kraftstoff in die Verbrennungsräume eingebracht und verbrannt, um die mechanische Leistung zu erzeugen.

Insbesondere betrifft die Erfindung den Fall, dass vorübergehend wenigstens einer der Verbrennungsmotoren abgeschaltet wird.

Eine Mehrzahl von Verbrennungsmotor-Maschinen-Kombinationen bietet Vorteile im Teillastbetrieb des Schienenfahrzeugs, d.h. in einem Betrieb, in dem nicht die maximal mögliche elektrische Leistung benötigt wird. Im Teillastbetrieb reicht die mechanische Leistung lediglich eines Teils der Verbrennungsmotoren aus, um die erforderliche elektrische Leistung bereitzustellen. Neben einer Reduktion des Kraftstoffverbrauchs der Verbrennungsmotoren hat der Teillastbetrieb auch den Vorteil, dass die Geräuschbelastung der Umgebung geringer ist. Beispielsweise können vier Verbrennungsmotor-Maschinen-Kombinationen vorhanden sein, wobei vorzugsweise jede Kombination unabhängig von den anderen Kombinationen entweder im Leerlaufbetrieb oder am optimalen Leistungspunkt betrieben werden kann. Optional können für jede Kombination mehr als zwei Betriebsarten eingestellt werden, z.B. zusätzlich zu den beiden genannten Betriebsarten ein Betrieb mit mittlerer Leistung der als Generator betriebenen elektrischen Maschine.

Insbesondere wird hiermit für die weiteren möglichen Merkmale einer Anordnung mit mehreren Verbrennungsmotor-Maschinen-Kombinationen auf die internationale Patentanmeldung mit der Anmeldenummer PCT/EP 2012/052705 Bezug genommen, die am 16. Februar 2012 eingereicht wurde. Insbesondere wird der gesamte Inhalt dieser Anmeldung hiermit in die vorliegende Anmeldung aufgenommen.

Es ist bekannt, die Verbrennungsmotoren vorzuwärmen, bevor sie gestartet werden. Insbesondere ist in der Praxis Kühlflüssigkeit in einem Kühlkreislauf zum Kühlen des Verbrennungsmotors vorhanden, wobei die Kühlflüssigkeit bei Bedarf vorgewärmt wird. Die für die Vorwärmung benötigte Energie kann insbesondere durch Umsetzung elektrischer Energie in Wärme, durch exotherme chemische Prozesse (insbesondere die Verbrennung fossiler Brennstoffe) und/oder durch Freisetzung gespeicherter thermischer Energie (optional durch Entladung eines Latentwärmespeichers) gewonnen werden.

Aus der WO 2008/089571 A1 ist ein Verfahren zum Steuern einer gewünschten Gesamt-Ausgangsleistung eines Fahrzeugs bekannt, das eine Mehrzahl von Energiequellen aufweist. Diese Energiequellen geben elektrische Leistung auf einen gemeinsamen Gleichspannungszwischenkreis aus. Es wird eine Anzahl von zu verwendenden Energiequellen ausgewählt, und zwar entsprechend einem Schema, um dem Gleichspannungszwischenkreis Leistung zuzuführen. Die Energiequellen werden entsprechend dem Schema aktiviert. Wenn die Ausgangsleistung einer der Energiequellen sich von einer Ziel-Ausgangsleistung unterscheidet, werden Steuerparameter der Energiequelle angepasst, um den Unterschied zu korrigieren. In dem konkreten Ausführungsbeispiel der Fig. 17 in der genannten Druckschrift wird zunächst ermittelt, ob ein warmer Verbrennungsmotor verfügbar ist. In jedem Fall wird bei der Auswahl der Verbrennungsmotoren berücksichtigt, welcher Verbrennungsmotor in der Vergangenheit öfter als andere benutzt wurde, um die Verwendung ungefähr auszugleichen. Ferner kann die Auswahl zufällig geschehen oder in einem turnusgemäßen Zyklus. Wenn kein warmer Verbrennungsmotor verfügbar ist, wird der ausgewählte Verbrennungsmotor vorgewärmt.

Es ist eine Aufgabe der vorliegenden Erfindung, die Verfügbarkeit der Verbrennungsmotoren in einer Anordnung zum Versorgen eines Schienenfahrzeugs mit elektrischer Energie zu erhöhen und dabei den Energieverbrauch zu reduzieren.

Insbesondere in der oben beschriebenen Weise können die Verbrennungsmotoren vor einem Start vorgewärmt werden. Es ist jedoch ein Grundgedanke der vorliegenden Erfindung, eine Vorwärmung der Verbrennungsmotoren nach Möglichkeit zu vermeiden. Bei der Auswahl der Verbrennungsmotoren für die Erzeugung elektrischer Energie wird daher der Start eines Verbrennungsmotors bevorzugt, zumindest wenn andernfalls eine Abkühlung des Verbrennungsmotors unter eine für den Start vorgegebene Mindesttemperatur stattfindet. Eine Bevorzugung des Starts eines solchen Verbrennungsmotors findet insbesondere im Vergleich zu einem Schema statt, gemäß dem die Verbrennungsmotoren ohne Berücksichtigung der Auskühlung für die Erzeugung elektrischer Energie ausgewählt werden.

Bei der Temperatur des Verbrennungsmotors, die für einen Start des Verbrennungsmotors einen vorgegebenen Mindestwert haben oder überschreiten muss, handelt es sich insbesondere um eine Kühlflüssigkeitstemperatur in einem Kühlkreislauf zum Kühlen des Verbrennungsmotors.

Insbesondere in dem oben erwähnten Teillastbetrieb kann es vorkommen, dass einer oder mehrere der Verbrennungsmotoren abgeschaltet werden. Dagegen wird der Betrieb in dem ebenfalls oben erwähnten Fall, in dem der Verbrennungsmotor von der elektrischen Maschine angetrieben wird, als Schubabschaltung bezeichnet. Eine Abkühlung des Verbrennungsmotors unter die für einen Start vorgegebene Mindesttemperatur kann insbesondere während eines Stillstandes des Schienenfahrzeugs (z.B. bei Halt in einem Bahnhof oder einer Haltestelle) stattfinden.

Wenn ein vor Auskühlung bedrohter Verbrennungsmotor gestartet wird, der ohne die bevorstehende Auskühlung gemäß einem Steuerungsschema nicht gestartet worden wäre, kann die Erzeugung der elektrischen Leistung auf die bereits vor dem Start des vor Auskühlung bedrohten Verbrennungsmotors betriebenen Verbrennungsmotoren (dies kann auch nur ein Verbrennungsmotor sein) und zusätzlich auf den neu gestarteten Verbrennungsmotor aufgeteilt werden. Es ist jedoch auch möglich, zumindest einen bereits in Betrieb befindlichen Verbrennungsmotor nach dem Start des vor Auskühlung bedrohten Verbrennungsmotors abzuschalten. Allerdings wird ein neu gestarteter Verbrennungsmotor zunächst in einem Zeitraum nach dem Start mit Kraftstoff versorgt werden und durch Verbrennung des Kraftstoffs mechanische Energie erzeugen, bevor er optional im Leerlaufbetrieb von der zugeordneten elektrischen Maschine angetrieben wird.

Indem ein von Auskühlung bedrohter Verbrennungsmotor gestartet wird, wird Energie für die Vorwärmung des Verbrennungsmotors gespart. Dem liegt der Gedanke zugrunde, dass jedenfalls während des normalen Betriebes des Schienenfahrzeugs sämtliche Verbrennungsmotoren für eine Erzeugung elektrischer Energie zur Verfügung stehen müssen. Ferner werden in vielen Anordnungen zum Erzeugen elektrische Energie für Schienenfahrzeuge Vorwärmanlagen für mehrere Verbrennungsmotoren miteinander gekoppelt. Bauartbedingt kann es unzulässig sein, die gemeinsame Vorwärmanlage auch nur für einen der Verbrennungsmotoren zur Vorwärmung zu nutzen, während ein anderer Verbrennungsmotor in Betrieb ist. Wenn bei einer solchen Vorwärmanlage keiner der Verbrennungsmotoren in Betrieb ist, könnte zwar bei Bedarf einer der Verbrennungsmotoren oder könnten mehrere der Verbrennungsmotoren vorgewärmt werden. Währenddessen wäre aber der Betrieb sämtlicher Verbrennungsmotoren, die über eine gemeinsame Vorwärmanlage verfügen, unzulässig. Im Fall gemeinsamer Vorwärmanlagen und der genannten Betriebsbeschränkungen erhöht die erfindungsgemäße Lösung daher die Verfügbarkeit der Verbrennungsmotoren.

Zum Beispiel können die Flüssigkeits-Kühlkreisläufe von zumindest zwei Verbrennungsmotoren miteinander verbunden sein oder durch Öffnen entsprechender Flüssigkeitsventile miteinander verbunden werden. Es ist eine Erwärmungseinrichtung zur Erwärmung der Kühlflüssigkeit vorgesehen. Aufgrund der Verbindung der Kühlkreisläufe kann diese Erwärmungseinrichtung für das Vorwärmen sämtlicher Verbrennungsmotoren genutzt werden, deren Flüssigkeits-Kühlkreisläufe miteinander verbunden sind.

Insbesondere kann von einer Steuerung der Anordnung ermittelt werden, wie viele der Verbrennungsmotoren während eines Betriebszeitraumes des Schienenfahrzeugs zu betreiben sind. Bei der Auswahl der zu betreibenden Verbrennungsmotoren wird dann erfindungsgemäß berücksichtigt, ob ein oder mehrere der Verbrennungsmotoren vor Auskühlung bedroht sind.

Wie bereits erwähnt, kann ein Schema vorgegeben sein, das unter Berücksichtigung des momentanen Betriebszustandes der Anordnung mit mehreren Verbrennungsmotoren, unter Berücksichtigung der momentanen Anforderungen an die Anordnung und optional auch zukünftiger Anforderungen an die Anordnung und ferner optional unter Berücksichtigung von weiteren Parametern der Anordnung (wie z.B. Fehler eines Verbrennungsmotors) die momentan für die Erzeugung von elektrischer Energie zu nutzenden Verbrennungsmotoren auswählt. Erfindungsgemäß wird jedoch, wenn die Voraussetzungen für den Start eines vor Auskühlung bedrohten Verbrennungsmotors vorliegen, die gemäß dem Schema vorzunehmende Selektion abgeändert, indem der vor Auskühlung bedrohte Verbrennungsmotor gestartet wird.

Beim Betrieb der Anordnung mit mehreren Verbrennungsmotoren kann eine Priorisierung von Verbrennungsmotoren gemäß den folgenden beiden Verfahrensweisen vorgenommen werden, die optional auch miteinander kombiniert werden können. Erstens kann sich die Priorisierung nur auf die Reihenfolge der Starts oder Stopps der Verbrennungsmotoren auswirken und optional auch den Wechsel des Betriebes eines oder mehrerer der Verbrennungsmotoren durch Stopp von zumindest einem betriebenen Verbrennungsmotor und Start von zumindest einem anderen Verbrennungsmotor erlauben. Die Priorisierung hat in diesem Fall Einfluss auf den Start und den Stopp der Motoren, insbesondere auf den Startzeitpunkt bzw. Stoppzeitpunkt. Gemäß diesem Verfahren werden Motoren mit höherer Priorisierung früher gestartet und/oder später gestoppt. Die Anzahl der Betriebsstunden der höher priorisierten Motoren erhöht sich daher stärker als die der geringer priorisierten Motoren. Die durchschnittliche Auslastung der höher priorisierten Verbrennungsmotoren sinkt aber, da sich der Anteil der Zeiträume mit Leerlauf des Motors erhöht.

Zweitens kann sich die Priorisierung bei der Aufteilung der benötigten mechanischen Leistung der Verbrennungsmotoren auswirken. Höher priorisierte Motoren erzeugen dann im Teillastbetrieb eine höhere Leistung als niedriger priorisierte Motoren. Die Leistung wird daher ungleichmäßig aufgeteilt.

Insbesondere kann gemäß dem Schema eine sogenannte statische Priorisierung bei der Auswahl der Verbrennungsmotoren für den Betrieb durchgeführt werden, d.h. eine Priorisierung nach langfristigen, langsam ändernden Kriterien, und vorzugsweise auch eine dynamische Priorisierung bei der Selektion, nach kurzfristigen Kriterien, die höher als die Kriterien der statischen Priorisierung gewichtet sind. Eines von mehreren möglichen Kriterien der dynamischen Priorisierung kann erfindungsgemäß der Start eines vor Auskühlung bedrohten Verbrennungsmotors sein. Andere Kriterien der dynamischen Priorisierung sind z.B. bekannte Einschränkungen der Verfügbarkeit von einem oder mehreren der Verbrennungsmotoren, z.B. bei einem bekannten Fehler, und/oder eine zu hohe Beladung eines Partikelfilters im Abgasstrang eines oder mehrerer der Verbrennungsmotoren. Insbesondere bei Dieselmotoren sind solche Partikelfilter bekannt. Bei einer zu geringen Abgastemperatur wird der Partikelfilter zunehmend beladen. Im Fall einer Erhöhung der Abgastemperatur, die insbesondere durch eine stärkere Belastung (d.h. erhöhte mechanische Leistung) des Verbrennungsmotors erreicht wird, kann die Beladung des Partikelfilters bekanntermaßen wieder reduziert werden.

Die Kriterien der dynamischen Priorisierung, welche höher zu gewichten sind als die Kriterien der statischen Priorisierung, sind allgemein formuliert insbesondere Kriterien, bei deren Nichtbeachtung Komponenten des Schienenfahrzeugs und insbesondere der Anordnung mit den Verbrennungsmotoren und/oder der Fahrbetrieb gefährdet sein kann.

Ein Kriterium der statischen Priorisierung ist z.B. der über längere Zeiträume insgesamt in gleicher Weise durchgeführte Betrieb der einzelnen Verbrennungsmotoren. Insbesondere können dabei die Betriebsstunden, der Kraftstoffverbrauch, die Anzahl der ausgeführten Umdrehungen der beweglichen Teile des Verbrennungsmotors und/oder die erzeugte mechanische Energie berücksichtigt werden. Alternativ oder zusätzlich kann die Auswahl der Motoren, die betrieben werden sollen, zufällig, gemäß einer stochastischen Verteilung und/oder nach dem Rotationsprinzip erfolgen. Ein weiteres Kriterien der statischen Priorisierung ist z.B. die Anzahl der Startvorgänge für die einzelnen Verbrennungsmotoren, wobei über lange Zeiträume diese Anzahlen gleich groß sein sollen.

Bei der Bestimmung der Anzahl der Verbrennungsmotoren, die gleichzeitig betrieben werden sollen, können insbesondere bestimmte Betriebsvorgaben, wie z.B. schnelle Reaktionsfähigkeit für Leistungsänderungen bei Fahrt in hügligem Gelände oder vergleichsweise langsame Reaktionsfähigkeit bei Fahrt im ebenen Gelände, berücksichtigt werden. Optional kann der Fahrzeugführer die Anzahl vorgegeben oder beeinflussen. Auch das Schema der Selektion kann der Fahrzeugführer optional beeinflussen oder er kann sogar direkt vorgeben, welcher Verbrennungsmotor als nächstes gestartet werden soll und/oder die Leistung von welchem Verbrennungsmotor gesteigert oder verringert werden soll. Auch das Stoppen eines Verbrennungsmotors kann der Fahrzeugführer optional unmittelbar vorgeben.

In jedem Fall (nicht nur im Fall einer zusätzlichen dynamischen Priorisierung) kann insbesondere gemäß den zuvor genannten Kriterien der statischen Priorisierung eine Reihenfolge für den Start der Verbrennungsmotoren ermittelt werden. Insbesondere wenn die erzeugte elektrische Leistung erhöht werden muss, z.B. wenn eine entsprechende erhöhte Anforderung gestellt wird, kann dann der in der Reihenfolge erste Verbrennungsmotor gestartet werden. Alternativ oder zusätzlich ergibt sich aus dem Schema, ob bei einem Teillastbetrieb zunächst die Leistung eines bereits betriebenen Verbrennungsmotors erhöht wird und/oder ob zumindest ein zusätzlicher Verbrennungsmotor gestartet wird.

Gemäß der Erfindung kann die durch ein Selektionsschema vorgegebene oder die gemäß dem Selektionsschema erhaltene Reihenfolge für den Start der Verbrennungsmotoren verändert werden. Z.B. wird ein gemäß der Reihenfolge als nächstes zu startender Verbrennungsmotor nicht gestartet und stattdessen ein vor Auskühlung bedrohter Verbrennungsmotor gestartet. Insbesondere kann daher eine Umordnung der Reihenfolge der zu startenden Verbrennungsmotoren stattfinden. Der Start eines vor Auskühlung bedrohten Verbrennungsmotors muss nicht unbedingt sofort ausgeführt werden.

Vorzugsweise werden bei der statischen Priorisierung die Anzahl der Betriebsstunden und ferner auch der Kraftstoffverbrauch langfristig gleichmäßig auf die vorhandenen (insbesondere auf die fehlerfrei arbeitenden) Verbrennungsmotoren aufgeteilt. Die sich daraus ergebende statische Priorisierung wird jedoch vorzugsweise von der dynamischen Priorisierung verändert. Insbesondere bedeutet dies, dass ein Motor trotz höherer statischer Priorisierung nicht betrieben wird, wenn dies die dynamische Priorisierung vorgibt. Anlass für die Veränderung der statischen Priorisierung durch die dynamische Priorisierung ist z.B. ein Fehler des Motors (etwa wegen zu hoher Temperaturen, nicht ausreichender Mengen, insbesondere Füllstände von Betriebsmitteln oder zu hoher Drehzahlen).

Im Fall der statischen und insbesondere auch der dynamischen Priorisierung wird die Anzahl der insgesamt stattfindenden Startvorgänge erhöht. Da jeder Startvorgang aber auch Energie verbraucht und zu einem Verschleiß der beteiligten Komponenten führt, wird die Priorisierung durch geeignete Zusatzkriterien vorzugsweise so ausgelegt, dass die Startanzahl so wenig wie möglich erhöht wird. Solche Zusatzkriterien sind z.B. die Temperatur der Verbrennungsmotoren, eine Hysterese bei der Ausführung von Starts und Stopps (d.h. ein vor Auskühlung bedrohter Verbrennungsmotor, der gestartet wird, muss eine vorgegebene Mindesttemperatur erreichen, bevor er wieder abgeschaltet werden darf) und/oder eine Verzögerung bei der Ausführung eines Stopps eines Verbrennungsmotors, der kurz zuvor gestartet wurde (d.h. der von dem Schema ermittelte Stopp wird noch nicht ausgeführt und bei Veränderung der Anforderungen möglicherweise langfristig nicht ausgeführt).

Bevorzugter Maßen werden abgeschaltete Verbrennungsmotoren nur soweit wie erforderlich gekühlt. Insbesondere ist es üblich, zusätzlich zu der oben erwähnten Flüssigkeitskühlung der Verbrennungsmotoren den Raum, in dem sich der jeweilige Verbrennungsmotor befindet und in dem sich auch die mit ihm kombinierte elektrische Maschine befindet, durch Erzeugen eines Kühlluftstromes durch den Raum zu kühlen. Hierfür werden Ventilatoren eingesetzt. Vorzugsweise ist jeder Raum, in dem sich eine Verbrennungsmotor-Maschinen-Kombination befindet, mit jeweils zumindest einem Ventilator kombiniert. Dabei ist es nicht ausgeschlossen, dass die Räume, in denen sich die verschiedenen Verbrennungsmotor-Maschinen-Kombinationen befinden, miteinander verbunden sind, sodass ein Luftaustausch zwischen den verschiedenen Räumen stattfinden kann. Der einer Kombination zugeordnete Ventilator erzeugt jedoch einen Kühlluftstrom überwiegend oder ausschließlich durch den Raum, der ihm zugeordneten Verbrennungsmotor-Maschinen-Kombination.

Es wird nun vorgeschlagen, zumindest einen Ventilator, der einer Verbrennungsmotor-Maschinen-Kombination zugeordnet ist, abhängig davon zu betreiben, ob der zugeordnete Verbrennungsmotor in Betrieb ist oder still steht. Insbesondere wird der Ventilator nur dann betrieben, wenn eine Temperatur der Verbrennungsmotor-Maschinen-Kombination einen vorgegebenen Grenzwert überschreitet und wenn der zugeordnete Verbrennungsmotor in Betrieb ist (d.h. die beweglichen Teile des Motors bewegen sich), d.h. er erzeugt einen Kühlluftstrom durch den Raum, in dem sich die zugeordnete Verbrennungsmotor-Maschinen-Kombination befindet. Im Folgenden werden der Ventilator oder die Ventilatoren, der/die einer Verbrennungsmotor-Maschinen-Kombination zugeordnet ist/sind, als Belüftungseinheit bezeichnet. Die verschiedenen Belüftungseinheiten der Motor-Maschinen-Kombinationen bilden insgesamt eine Belüftungseinrichtung. Der genannte Temperaturgrenzwert wird im Folgenden auch als zweiter vorgegebener Temperaturgrenzwert bezeichnet, um ihn von einem ersten vorgegebenen Temperaturgrenzwert zu unterscheiden, der für die Ermittlung genutzt werden kann, ob sich ein Verbrennungsmotor so weit abgekühlt hat, dass er deshalb wieder gestartet werden soll.

Das Betreiben der Belüftungseinheiten abhängig vom Betrieb des zugeordneten Verbrennungsmotors und abhängig von der Temperatur hat den Vorteil, dass die Verbrennungsmotoren langsamer abkühlen und der Start eines vor Auskühlung bedrohten Verbrennungsmotors daher verzögert wird. Dies reduziert die für die Startvorgänge der Verbrennungsmotoren benötigte Energie und reduziert ebenfalls auch den Verschleiß der Verbrennungsmotoren und auch der elektrischen Maschinen. Insbesondere kann die einer Motor-Maschinen-Kombination zugeordnete Belüftungseinheit abgeschaltet bleiben (zum Beispiel bleibt der Ventilator oder bleiben die Ventilatoren der Belüftungseinheit abgeschaltet), bis ein Temperaturgrenzwert der Verbrennungsmotor-Temperatur (der bei der Beschreibung einer Ausführungsform im Folgenden auch als dritter Temperaturgrenzwert bezeichnet wird) erreicht oder überschritten wird. Dabei liegt der Temperaturgrenzwert insbesondere über dem ersten vorgegebenen Temperaturgrenzwert, bei dessen Unterschreiten der abgeschaltete Verbrennungsmotor wieder gestartet wird.

Insbesondere wird vorgeschlagen: Eine Anordnung zum Versorgen eines Schienenfahrzeugs mit elektrischer Energie, wobei die Anordnung aufweist:
- zumindest zwei Verbrennungsmotoren,
- für die zumindest zwei Verbrennungsmotoren jeweils eine zugeordnete elektrische Maschine zum Erzeugen der elektrischen Energie, wobei die elektrische Maschine mechanisch mit dem Verbrennungsmotor gekoppelt ist, sodass sie bei einem Generator-Betrieb der elektrischen Maschine von dem Verbrennungsmotor angetrieben wird, sodass zumindest eine erste und eine zweite Verbrennungsmotor-Maschinen-Kombination gebildet ist,

- eine gemeinsame Steuerung der Verbrennungsmotor-Maschinen-Kombinationen, wobei die Steuerung ausgestaltet ist, die Verbrennungsmotoren bei Bedarf einzeln zu starten,
- zumindest eine Vorwärmeinrichtung, die ausgestaltet ist, die Verbrennungsmotoren vor einem Start vorzuwärmen,
- eine Temperatur-Ermittlungseinrichtung, die mit den Verbrennungsmotoren thermisch gekoppelt ist und die über eine Signalverbindung mit der Steuerung verbunden ist, um Informationen über Temperaturen der Verbrennungsmotoren an die Steuerung zu übermitteln,
wobei die Steuerung ausgestaltet ist, während eines Betriebes eines der Verbrennungsmotoren einen anderen der Verbrennungsmotoren zu starten, wenn aufgrund einer Abkühlung des anderen Verbrennungsmotors eine von der Temperatur-Ermittlungseinrichtung ermittelte Temperatur des anderen Verbrennungsmotors einen ersten vorgegebenen Temperaturgrenzwert erreicht oder unterschreitet.

Die Erfindung betrifft ferner ein Schienenfahrzeug, das die Anordnung gemäß einer der Ausgestaltungen aufweist, die in dieser Beschreibung und den Figuren offenbart sind.

Gemäß einem Verfahren zum Herstellen der Anordnung oder des Schienenfahrzeugs mit der Anordnung werden bereitgestellt:
- zumindest zwei Verbrennungsmotoren,
- für die zumindest zwei Verbrennungsmotoren jeweils eine zugeordnete elektrische Maschine zum Erzeugen der elektrischen Energie, wobei die elektrische Maschine mechanisch mit dem Verbrennungsmotor gekoppelt wird, sodass sie bei einem Generator-Betrieb der elektrischen Maschine von dem Verbrennungsmotor angetrieben wird, sodass zumindest eine erste und eine zweite Verbrennungsmotor-Maschinen-Kombination gebildet ist,
- eine gemeinsame Steuerung der Verbrennungsmotor-Maschinen-Kombinationen, wobei die Steuerung ausgestaltet wird, die Verbrennungsmotoren bei Bedarf einzeln zu starten,
- zumindest eine Vorwärmeinrichtung, die ausgestaltet wird, die Verbrennungsmotoren vor einem Start vorzuwärmen,
- eine Temperatur-Ermittlungseinrichtung, die mit den Verbrennungsmotoren thermisch gekoppelt wird und die über eine Signalverbindung mit der Steuerung verbunden wird, um Informationen über Temperaturen der Verbrennungsmotoren an die Steuerung zu übermitteln,
wobei die Steuerung ausgestaltet wird, während eines Betriebes eines der Verbrennungsmotoren einen anderen der Verbrennungsmotoren zu starten, wenn aufgrund einer Abkühlung des anderen Verbrennungsmotors eine von der Temperatur-Ermittlungseinrichtung ermittelte Temperatur des anderen Verbrennungsmotors einen ersten vorgegebenen Temperaturgrenzwert erreicht oder unterschreitet.

Neben dem Steuern der Verbrennungsmotor-Maschinen-Kombinationen kann die Steuerung noch weitere Funktionen erfüllen. Insbesondere kann die Steuerung Teil einer übergeordneten Steuerung des Schienenfahrzeugs sein, die auch die Traktionsmotoren des Schienenfahrzeugs und/oder Stromrichter steuert, die insbesondere für den Betrieb der Traktionsmotoren, der Hilfsbetriebe und/oder weiterer elektrischer Verbraucher in dem Schienenfahrzeug Strom erzeugen. Diese Stromrichter sind insbesondere an einen gemeinsamen Gleichspannungszwischenkreis angeschlossen, in den die elektrischen Maschinen über einen Gleichrichter elektrische Energie einspeisen.

Die Temperatur-Ermittlungseinrichtung weist insbesondere für jede der Verbrennungsmotor-Maschinen-Kombinationen zumindest einen Temperaturfühler auf, der die Temperatur der Kombination misst. Insbesondere kann der Temperaturfühler eine Kühlflüssigkeitstemperatur der zur Kühlung des Verbrennungsmotors genutzten Kühlflüssigkeit messen. Der Temperaturfühler ist in diesem Fall in einem Kühlflüssigkeitskreislauf angeordnet, z.B. in einem Abschnitt des Kühlflüssigkeitskreislaufes, der unmittelbar in Kontakt mit dem Verbrennungsmotor ist.

Die Formulierung "einen vorgegebenen Temperaturgrenzwert erreicht oder unterschreitet" betrifft zwei unterschiedliche Fälle. Im ersten Fall ist die Bedingung für den Start des anderen Verbrennungsmotors, d.h. des vor Auskühlung bedrohten Verbrennungsmotors, erfüllt, wenn aufgrund der Abkühlung der vorgegebene Temperaturgrenzwert erreicht wird, d.h. die ermittelte Temperatur gleich dem Temperaturgrenzwert ist. Im anderen Fall ist die Bedingung erfüllt, wenn die ermittelte Temperatur den vorgegebenen Temperaturgrenzwert unterschreitet, d.h. kleiner als der Temperaturgrenzwert wird.

Ferner wird vorgeschlagen: Ein Verfahren zum Betreiben einer Anordnung zum Versorgen eines Schienenfahrzeugs mit elektrischer Energie, wobei:
- bei Bedarf zumindest zwei Verbrennungsmotoren der Anordnung gleichzeitig betrieben werden,
- für die Erzeugung der elektrischen Energie jeweils eine elektrische Maschine genutzt wird, die mechanisch mit dem Verbrennungsmotor gekoppelt ist, sodass sie bei einem Generator-Betrieb der elektrischen Maschine von dem Verbrennungsmotor angetrieben wird und sodass zumindest eine erste und eine zweite Verbrennungsmotor-Maschinen-Kombination gebildet ist,
- die Verbrennungsmotoren optional bei Bedarf vor einem Start vorgewärmt werden,
- Informationen über ermittelte Temperaturen der Verbrennungsmotoren an eine Steuerung der Anordnung übermittelt werden,
wobei die Steuerung während eines Betriebes eines der Verbrennungsmotoren einen anderen der Verbrennungsmotoren startet, wenn aufgrund einer Abkühlung des anderen Verbrennungsmotors eine ermittelte Temperatur des anderen Verbrennungsmotors einen ersten vorgegebenen Temperaturgrenzwert erreicht oder unterschreitet.

Insbesondere kann die Steuerung den anderen Verbrennungsmotor bei Erreichen oder Unterschreiten des vorgegebenen Temperaturgrenzwertes starten, obwohl eine Motorleistung des Verbrennungsmotors oder der Verbrennungsmotoren, die bereits in Betrieb sind, für die Versorgung des Schienenfahrzeugs mit elektrischer Energie ausreicht.

Insbesondere kann die Steuerung oder eine übergeordnete Steuerung die benötigte Motorleistung ermitteln. Im Teillastbetrieb, also wenn nicht die maximal mögliche Leistung der Anordnung gefordert ist, kann die Situation auftreten, dass zumindest einer der Verbrennungsmotoren der Anordnung abgeschaltet werden kann. Wenn nun ein abgeschalteter Verbrennungsmotor vor Auskühlung bedroht ist, was insbesondere durch Feststellen einer der o.g. Bedingungen anhand eines Vergleichs der ermittelten Temperatur mit dem vorgegebenen Temperaturgrenzwert festgestellt wird, wird der vor Auskühlung bedrohte Verbrennungsmotor gestartet, obwohl dies für die Erzeugung der geforderten Motorleistung nicht nötig ist. Dies kann auch dann gelten, wenn die geforderte Motorleistung beim Eintreten der genannten Bedingung gleich bleibt oder sogar abnimmt.

Alternativ oder zusätzlich kann die Steuerung die Motorleistung des bereits in Betrieb befindlichen Verbrennungsmotors oder der bereits in Betrieb befindlichen Verbrennungsmotoren reduzieren, sobald der andere Verbrennungsmotor gestartet ist und zu einer Gesamt-Motorleistung sämtlicher in Betrieb befindlicher Verbrennungsmotoren beiträgt.

Auf diese Weise ist es nicht erforderlich, einen bereits in Betrieb befindlichen Verbrennungsmotor zu stoppen, d.h. außer Betrieb zu nehmen, wenn der vor Auskühlung bedrohte Verbrennungsmotor gestartet wird. Dies ist insbesondere dann von Vorteil, wenn zu häufige Stopps und Starts von Verbrennungsmotoren vermieden werden sollen.

Wie bereits oben erwähnt, kann die Anordnung eine Belüftungseinrichtung zum Belüften und somit zum Kühlen der Motor-Maschinen-Kombinationen aufweisen. Jeder der Motor-Maschinen-Kombinationen ist eine von mehreren Belüftungseinheiten der Belüftungseinrichtung zugeordnet, so dass die Belüftungseinheiten während ihres Betriebes hauptsächlich oder ausschließlich jeweils die ihr zugeordnete Motor-Maschinen-Kombination kühlen. Insbesondere ist jede der Motor-Maschinen-Kombinationen mit jeweils zumindest einem Temperatursensor kombiniert und werden/sind die Belüftungseinheiten trotz des Betriebes des Schienenfahrzeugs jeweils dann abgeschaltet, wenn der Verbrennungsmotor der ihr zugeordneten Motor-Maschinen-Kombination außer Betrieb ist oder wenn ein Temperatur-Messwert des Temperatursensors oder der Temperatursensoren der ihr zugeordneten Motor-Maschinen-Kombination ein Temperatur-Kriterium erfüllt, nämlich entweder kleiner als der zweite vorgegebene Temperaturgrenzwert ist oder kleiner als oder gleich dem zweiten vorgegebenen Temperaturgrenzwert ist.

Zusätzlich ist vorzugsweise ein dritter Temperaturgrenzwert vorgegeben, der höher liegt als der zweite vorgegebene Temperaturgrenzwert. Z.B. liegen der zweite Temperaturgrenzwert bei 30°C und der dritte Temperaturgrenzwert bei 50°C. Wenn der Temperatur-Messwert des Temperatursensors oder der Temperatursensoren der zugeordneten Motor-Maschinen-Kombination größer als der dritte vorgegebene Temperaturgrenzwert ist oder wenn - in einem anderen Fall - der Temperatur-Messwert größer als oder gleich dem dritten vorgegebenen Temperaturgrenzwert ist, ist/wird die zugeordnete Belüftungseinheit unabhängig davon eingeschaltet, ob der Verbrennungsmotor der Kombination in Betrieb oder außer Betrieb ist. Dadurch kann einer Überhitzung von Komponenten der Motor-Maschinen-Kombination in jedem Fall entgegengewirkt werden, auch wenn äußere Einflüsse und/oder andere Verbrennungsmotoren zu einer Erwärmung geführt haben.

Wenn der Temperatur-Messwert größer als der zweite vorgegebene Temperaturgrenzwert (z.B. 30°C) ist und der zugeordnete Verbrennungsmotor in Betrieb ist, wird auch die zugeordnete Belüftungseinheit betrieben. Auf diese Weise wird ebenfalls einer Überhitzung vorgebeugt. Es werden aber nur diejenigen Belüftungseinheiten betrieben, die benötigt werden. Insbesondere wird dadurch die Geräuschbildung minimiert. Von Bedeutung ist die Geräuschbildung insbesondere beim Stillstand des Schienenfahrzeugs in Bahnhöfen oder an Haltestellen. Im Gegensatz zu einem Betrieb eines Verbrennungsmotors, von dem nur dann gesprochen wird, wenn die beweglichen Teile des Verbrennungsmotors in Bewegung sind, wird von einem Betrieb des Schienenfahrzeugs auch dann gesprochen, wenn dieses still steht (z.B. beim Aufenthalt in einem Bahnhof), jedoch zumindest einer der Verbrennungsmotoren in Betrieb ist. Wenn das Schienenfahrzeug daher still steht, kann die maximale Anzahl der gleichzeitig betriebenen Belüftungseinheiten auf einen Wert beschränkt werden, der kleiner als die Anzahl der vorhandenen Belüftungseinheiten ist. Dem liegt der Gedanke zugrunde, dass im Stillstand des Schienenfahrzeugs niemals die maximal mögliche Gesamtleistung der Verbrennungsmotoren benötigt wird. Außerdem steht das Schienenfahrzeug häufig dann still, wenn es sich in einem Bahnhof oder an einer Haltestelle befindet. Die Geräuschbildung ist daher zu minimieren.

Z.B. wird bei insgesamt vier Motor-Maschinen-Kombinationen die maximale Anzahl der im Stillstand des Schienenfahrzeugs betriebenen Belüftungseinheiten auf zwei festgesetzt. Dies bedeutet, dass auch beim Betrieb von mehr als einem Verbrennungsmotor und insbesondere auch mehr als zwei Verbrennungsmotoren im Stillstand des Schienenfahrzeugs lediglich zwei Belüftungseinheiten betrieben werden. Die Auswahl der zu betreibenden Belüftungseinheiten kann anhand verschiedener Kriterien getroffen werden, insbesondere der Geräuschbildung, der Temperatur im Maschinenraum und der Temperaturdifferenz zwischen den verschiedenen Verbrennungsmotoren im Maschinenraum. Wenn sich auf jeder Seite des Schienenfahrzeugs (also rechts und links in Fahrtrichtung gesehen) jeweils zwei Motor-Maschinen-Kombinationen befinden, kann vorgegeben sein, dass auf jeder Seite maximal eine Belüftungseinheit betrieben werden darf, wenn sich das Schienenfahrzeug im Stillstand befindet. Dadurch wird die Geräuschbildung weiter reduziert. Alternativ oder zusätzlich kann die Geräuschbildung der einzelnen Belüftungseinheiten dadurch gesteuert werden, dass ihre Belüftungsleistung eingestellt wird. Insbesondere kann dies durch Einstellen (insbesondere durch Reduzieren) der Wechselstromfrequenz des elektrischen Wechselstroms erreicht werden, mit dem die Belüftungseinheit versorgt wird.

Komponenten der Motor-Maschinen-Kombination, die insbesondere vor Übertemperatur zu schützen sind, schließen die Kupplung im Antriebsstrang zwischen Verbrennungsmotor und elektrischer Maschine, die elektrischen Schütze der elektrischen Maschine zum elektrischen Anschluss der Maschine an das elektrische Bordnetz und insbesondere an den Gleichspannungszwischenkreis sowie die mechanischen Schwingungsdämpfer des Verbrennungsmotors mit ein.

Insbesondere zum Schutz dieser und weiterer Komponenten der Kombinationen dient die folgende bevorzugte Vorgehensweise. In einem ersten Schritt wird bei Erreichen eines vierten vorgegebenen Temperaturgrenzwertes (z.B. 60°C) durch den Temperatur-Messwert die Wechselstromfrequenz des Lüfter-Versorgungsstromes auf den Maximalwert erhöht (z.B. 60 Hz). Beim Betrieb der Belüftungseinheit unterhalb des vierten vorgegebenen Temperaturgrenzwertes ist die Wechselstromfrequenz geringer und liegt entweder konstant bei ihrem Minimalwert (z.B. 45 Hz) oder wird mit zunehmender Temperatur stetig oder stufenweise angehoben, bis bei Erreichen des vierten vorgegebenen Temperaturgrenzwertes der Maximalwert der Frequenz erreicht ist. Die genannte Wechselstromfrequenz wird insbesondere durch entsprechende Steuerung eines Hilfsbetriebeumrichters erzielt, der an den Gleichspannungszwischenkreis angeschlossen ist, in den die elektrischen Maschinen elektrische Energie einspeisen.

Als weitere Schutzmaßnahme kann ein fünfter Temperaturgrenzwert vorgegeben werden/sein. Erreicht der Temperatur-Messwert den fünften vorgegebenen Temperaturgrenzwert, kann die Leistung des zugeordneten Verbrennungsmotors reduziert werden, insbesondere durch Absenkung der Drehzahl des Verbrennungsmotors auf eine Leerlaufdrehzahl.

In bevorzugter Ausgestaltung ist zumindest eine der Belüftungseinheiten und sind vorzugsweise alle Belüftungseinheiten mit jeweils einem Ventilatorschutzschalter versehen. Ferner kann die Funktion dieses Schutzschalters überwacht werden, z.B. über zusätzliche elektrische Kontakte des Schutzschalters. Der Ventilatorschutzschalter schaltet den Ventilator oder die Ventilatoren ab, wenn der elektrische Motor des Ventilators überlastet ist, z.B. bei einem Windungskurzschluss.

Bevorzugtermaßen wird die Leistung der Belüftungseinheit und optional sogar aller anderen in Betrieb befindlichen Belüftungseinheiten erhöht und insbesondere auf die maximal mögliche Belüftungsleistung erhöht, wenn die Überwachung des Ventilatorschutzschalters feststellt, dass der Ventilatorschutzschalter nicht mehr funktionsfähig ist. Die gleiche Maßnahme kann alternativ oder zusätzlich ergriffen werden, wenn der Temperatursensor der Motor-Maschinen-Kombination defekt ist oder der entsprechende Temperatur-Messwert aus anderen Gründen (z.B. bei einem Defekt der Auswertungseinrichtung zur Auswertung des Temperaturmesswertes) nicht mehr feststellbar ist. Insbesondere wird die maximale Belüftungsleistung wieder dadurch eingestellt, dass die Frequenz des elektrischen Versorgungsstromes auf ihren Maximalwert angehoben wird.

Ausführungsbeispiele der Erfindung werden nun unter Bezugnahme auf die beigefügte Zeichnung beschrieben. Die einzelnen Figuren der Zeichnung zeigen schematisch:
- Fig. 1: eine Ausführungsform einer Anordnung zum Versorgen von zumindest einem Traktionsmotor und zusätzlichen elektrischen Hilfsbetrieben in einem Schienenfahrzeug mit elektrischer Energie,
- Fig. 2: ein Steuerungssystem in einem Schienenfahrzeug,
- Fig. 3: eine Draufsicht auf einen Maschinenraum mit drei Motor-Maschinen-Kombinationen, denen jeweils eine Belüftungseinheit zugeordnet ist, und
- Fig. 4: ein Flussdiagramm zur Darstellung des Ablaufs einer Steuerung des Betriebs einer Mehrzahl von Verbrennungsmotor-Maschinen-Kombinationen.

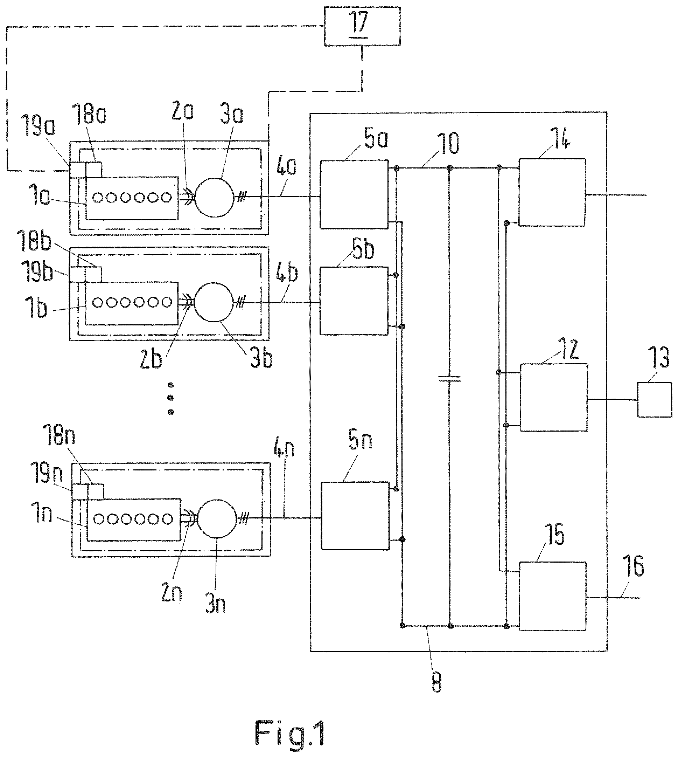

Das in Fig. 1 dargestellte Ausführungsbeispiel weist eine Mehrzahl von Verbrennungsmotor-Maschinen-Kombinationen 1, 3 auf, wobei die Verbrennungsmotoren 1a, 1b, ..., 1n vorzugsweise Dieselmotoren sind. Bei den elektrischen Maschinen 3a, 3b, ..., 3n handelt es sich z.B. um Permanentmagnet-Synchronmotoren. Dargestellt sind jeweils drei Exemplare der Komponenten, wobei die drei Punkte zwischen den Kombinationen 1b, 3b und 1n, 3n andeuten, dass noch weitere Exemplare vorhanden sein können. Die Verbrennungsmotoren 1 sind jeweils über eine Antriebswelle mit Kupplung 2a, 2b, ..., 2n mit der zugeordneten elektrischen Maschine 3 gekoppelt.

Jede der Kombinationen 1, 3 ist über eine dreiphasige Anschlussleitung 4a, 4b, ..., 4n mit einem der Kombination 1, 3 zugeordneten Generator-Gleichrichter 5a, 5b, ..., 5n verbunden. Die Gleichrichter 5 sind an einen Gleichspannungs-Zwischenkreis mit den Leitungen 8, 10 verbunden.

Die Motoren 1 sind jeweils mit einem Kühlkreislauf 18a, 18b, ..., 18n kombiniert, in dem bei Betrieb des Kühlkreislaufs 18 Kühlflüssigkeit zirkuliert und den Motor 1 kühlt. Jeder Kühlkreislauf 18 ist mit zumindest einem Temperaturfühler 19a, 19b, ... 19n kombiniert, der die Temperatur der Kühlflüssigkeit misst. Wie durch eine gestrichelte Linie oben in Fig. 1 lediglich für den Temperaturfühler 19a dargestellt ist, sind die Temperaturfühler 19 über eine Signalverbindung mit einer Steuerung 17 verbunden, die den Betrieb der Kombinationen 1, 3 steuert. Durch eine gestrichelte Linie von der Steuerung 17 zu der oben in Fig. 1 dargestellten Kombination 1a, 3a ist angedeutet, dass die Steuerung den Betrieb jeder der Kombinationen 1, 3 Steuern kann, insbesondere den jeweiligen Verbrennungsmotor 1 starten und stoppen kann.

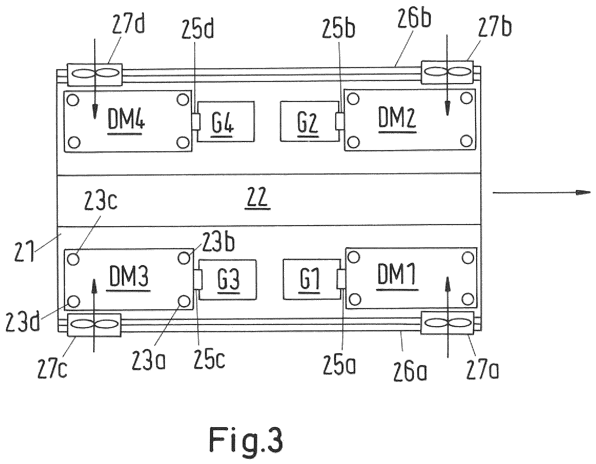

Ein Hilfsbetriebe-Wechselrichter 12 ist mit seinen beiden gleichspannungsseitigen Anschlussleitungen an die Leitungen 8, 10 des Zwischenkreises angeschlossen. Mit seiner Wechselspannungsseite ist der Hilfsbetriebe-Wechselrichter 12 elektrisch an Belüftungseinheiten 13 zur Belüftung und somit Kühlung der Verbrennungsmotor-Maschinen-Kombinationen 1, 3 angeschlossen, wobei die Belüftungseinheiten 13 schematisch durch ein Rechteck dargestellt sind. Figur 3 zeigt ein konkretes Ausführungsbeispiel, in dem vier Belüftungseinheiten dargestellt sind.

Ferner sind an den Gleichspannungszwischenkreis ein Traktionsmotor-Wechselrichter 14 und ein Sammelschienen-Wechselrichter 15 angeschlossen. Während des Betriebes des Schienenfahrzeugs versorgt der Traktionsmotor-Wechselrichter 14 zumindest einen Traktionsmotor mit Wechselstrom und somit mit elektrischer Energie. Der Sammelschienen-Wechselrichter 15 versorgt über eine Zug-Sammelschiene 16 elektrische Verbraucher wie zum Beispiel Klimaanlage, Heizung, Beleuchtungsanlage.

Außer den Belüftungseinheiten 13 kann der Hilfsbetriebe-Wechselrichter 12 oder ein weiterer, nicht dargestellte Hilfsbetriebe-Wechselrichter weitere Hilfsbetriebe mit elektrischer Energie aus dem Gleichspannungszwischenkreis versorgen.

Wenn von den an den Gleichspannungszwischenkreis angeschlossenen elektrischen Verbrauchern nicht die maximal mögliche elektrische Leistung benötigt wird, die die Verbrennungsmotoren 1 über ihre elektrischen Maschinen 3 erzeugen können, können aufgrund der Mehrzahl der Verbrennungsmotor-Maschinen-Kombinationen 1, 3 einzelne Kombinationen 1, 3 abgeschaltet werden, d.h. der Verbrennungsmotor der Kombination ist außer Betrieb. Alternativ kann eine solche Kombination im Leerlauf des Verbrennungsmotors betrieben werden. Die Entscheidung über eine Abschaltung des Verbrennungsmotors oder einen Leerlaufbetrieb kann eine automatische Steuerung treffen, z.B. ein Fahrer-Assistenz-System. Alternativ kann der Fahrer, d.h. der Fahrzeugführer, die Entscheidung selbst treffen oder beeinflussen.

Die Anzahl der Kombinationen 1, 3, auf die die Erzeugung elektrischer Energie aufgeteilt werden soll, kann insbesondere in Abhängigkeit vom momentanen Leistungsbedarf bzw. von dem angeforderten Leistungsbedarf getroffen werden. Insbesondere kann dabei der Leistungsbedarf bzw. die Leistungsanforderung mit vorgegebenen Leistungsschwellen verglichen werden, für die Informationen für den Betrieb der Motor-Maschinen-Kombinationen hinterlegt sind.

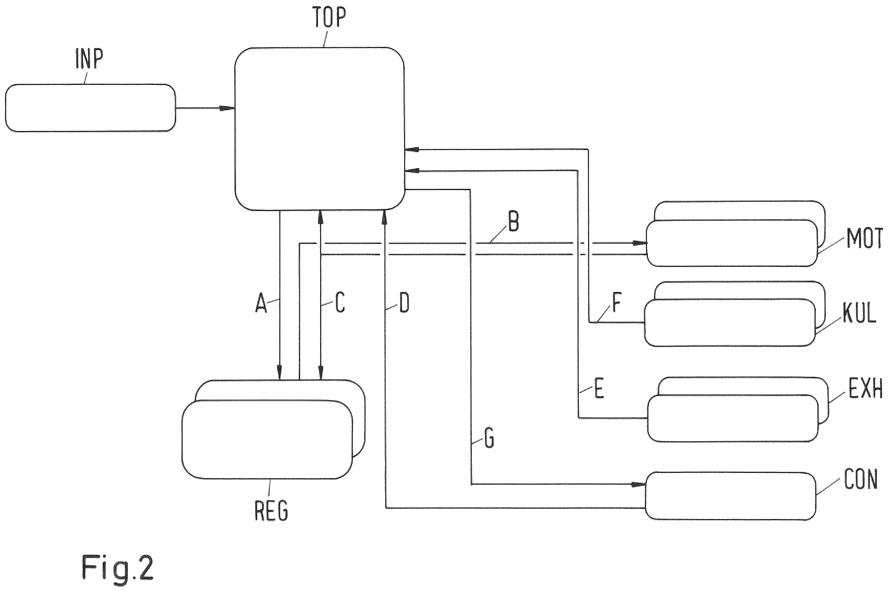

In Fig. 2 sind Eingaben, die z.B. der Fahrzeugführer oder das Fahrer-Assistenzsystem bereitstellen, für den Betrieb einer in Fig. 2 dargestellten Steuerung durch den Block INP dargestellt. Sie werden einer übergeordneten Fahrzeugsteuerung TOP übermittelt. Die übergeordnete Fahrzeugsteuerung TOP hat insbesondere die Funktion, Betriebsgrößen wie z.B. die Leistungsbilanz der gesteuerten Motor-Maschinen-Kombinationen zu erstellen und eine Priorisierung bei der Auswahl der zu betreibenden Verbrennungsmotoren der Anordnung zu treffen.

Wie Pfeil A andeutet, steuert die übergeordnete Fahrzeugsteuerung TOP den Betrieb einer untergeordneten Motor-Maschinen-Steuerung bzw. -regelung REG. Diese untergeordnete Steuerung REG hat die Aufgabe, den Start und den Stopp der einzelnen Verbrennungsmotoren der Anordnung MOT zu steuern (wie Pfeil B andeutet) und dabei insbesondere auf eine über längere Zeiträume gleichmäßige Belastung oder gleichmäßigen Betrieb der Verbrennungsmotoren zu achten. Die Kombination der Steuerungen TOP, REG ist ein Ausführungsbeispiel der in Fig. 1 dargestellten Steuerung 17. Wie Doppelpfeil C andeutet, tauschen die übergeordnete Steuerung TOP und die untergeordnete Steuerung REG während des Betriebes Informationen untereinander aus. Z.B. überträgt die untergeordnete Steuerung REG Informationen über die gleichmäßige oder ungleichmäßige Nutzung der einzelnen Verbrennungsmotoren zu der übergeordneten Steuerung TOP. Entsprechende Informationen sind z.B. Prozessgrößen wie Drehzahlen, Temperaturen, elektrische Ströme, jedoch auch Fehlermeldungen. Die übergeordnete Steuerung TOP überträgt an die untergeordnete Steuerung REG insbesondere für jeden der Verbrennungsmotoren einen Leistungssollwert und/oder die Vorgabe, welche Verbrennungsmotoren in Betrieb sein sollen (Pfeil A). Die untergeordnete Steuerung REG überträgt an die Motor-Maschinen-Kombinationen außer den Start- und Stoppbefehlen auch Leistungs- und/oder Drehzahlsollwerte.

Die elektrischen Verbraucher, die insbesondere die Traktionsmotoren, die Hilfsbetriebe und die über die Zugsammelschiene versorgten Verbraucher sind, sind in Fig. 2 schematisch durch den Block CON dargestellt. Von der übergeordneten Steuerung TOP können Steuerbefehle oder andere Vorgaben an die Verbraucher übertragen werden (Pfeil G), z.B. Traktionskräfte für das Traktionssystem und Bremskräfte für das Bremssystem. Umgekehrt können die Verbraucher CON Informationen über ihren Betrieb (z.B. tatsächliche elektrische Leistungen oder Kräfte) sowie Fehlermeldungen an die übergeordnete Steuerung TOP übertragen (Pfeil D).

Mit EXH ist das Abgassystem der Verbrennungsmotoren dargestellt. Dazu gehören auch Partikelfilter, insbesondere wenn es sich um Dieselmotoren handelt. Von den Partikelfiltern werden Informationen über ihre Beladung mit Partikeln an die übergeordnete Steuerung TOP übertragen (Pfeil E).

Die Kühleinrichtung KUL zum Kühlen der Verbrennungsmotoren bzw. der Motor-Maschinen-Kombinationen überträgt an die übergeordnete Steuerung TOP Informationen über ihren Betrieb, wie z.B. Temperaturen und Fehlermeldungen (Pfeil F). Die Kühleinrichtung KUL ist mit einer Vorwärmeinrichtung kombiniert, die die Kühlflüssigkeit in einem Kühlkreislauf erwärmen kann, um den Motor vor einem Start vorzuwärmen.

Der Zeitpunkt, zu dem Verbrennungsmotoren während eines Teillastbetriebes gestartet oder gestoppt werden, hängt insbesondere vom gegenwärtigen und zukünftigen Gesamt-Leistungsbedarf ab. Ist der zukünftige Gesamt-Leistungsbedarf nicht bekannt, wie es z.B. bei einem vorliegenden gespeicherten Lastprofil oder im Fall eines entsprechend ausgestalteten Fahrer-Assistenzsystems der Fall ist, dann ist es insbesondere möglich, dass der Fahrzeugführer Informationen über den zukünftigen Leistungsbedarf dem Steuerungssystem mitteilt. Z.B. kann der Fahrzeugführer auf diese Weise eine Prognose des zukünftigen Gesamt-Leistungsbedarfs an das System mitteilen. Der Fahrzeugführer kann dies z.B. durch Wahl eines vordefinierten Betriebsmodus durchführen. Alternativ oder zusätzlich kann der Fahrzeugführer selbst die zu betreibenden Motoren oder zumindest die zu betreibende Motoranzahl eingeben.

Im speziellen Ausführungsbeispiel der Fig. 3 sind vier Verbrennungsmotor-Maschinen-Kombinationen gemeinsam in einem Maschinenraum 21 angeordnet, der über einen Mittelgang 22 verfügt. Der Raum für den Fahrzeugführer befindet sich z.B. rechts von dem Maschinenraum 21, wie der Pfeil rechts in Fig. 3 andeutet. Die einzelnen Verbrennungsmotoren, z.B. Dieselmotoren, sind mit den Bezugszeichen DM1, DM2, DM3 und DM4 bezeichnet. Einige Schwingungsdämpfer der Motoren DM sind durch kleine Kreise mit den Bezugszeichen 23a bis 23d bezeichnet. Jeder der Motoren DM ist mechanisch über eine nicht näher dargestellte Antriebswelle mit einer elektrischen Maschine G1, G2, G3, G4 gekoppelt. Im Antriebsstrang zwischen dem Verbrennungsmotor DM und der elektrischen Maschine G, insbesondere im Bereich einer Kupplung des Antriebsstranges, ist jeweils ein Temperaturfühler 25a, 25b, 25c, 25d angeordnet.

Die Motor-Maschinen-Kombinationen sind in einem gemeinsamen, nicht vollständig in Teile abgeschotteten Maschinenraum 21 angeordnet, sodass innerhalb des Maschinenraums 21 ein Luftaustausch stattfinden kann. In den Seitenwänden 26a, 26b des Maschinenraums 21, die auch die Außenwände des Schienenfahrzeugs bilden, befinden sich Lufteintrittsöffnungen mit jeweils zumindest einem Ventilator 27a, 27b, 27c, 27d. Die Ventilatoren 27 saugen Luft aus der Umgebung des Schienenfahrzeugs durch die Seitenwände 26 hindurch in den Maschinenraum, wobei jede der Belüftungseinheiten einer der Verbrennungsmotor-Maschinen-Kombinationen zugeordnet ist, d.h. der angesaugte Luftstrom kühlt primär die zugeordnete Kombination. Der Luftaustritt befindet sich z.B. im Dachbereich des Maschinenraums. Die Ventilatoren werden insbesondere abhängig von den Temperatur-Messwerten betrieben, die der jeweils derselben Verbrennungsmotor-Maschinen-Kombination zugeordnete Temperaturfühler 25 misst.

Die von den Belüftungseinheiten während ihres Betriebes von außen angesaugte Kühlluft strömt zunächst am Verbrennungsmotor DM entlang und dann an der elektrischen Maschine G vorbei, bis die erwärmte Kühlluft oben am Dach wieder in die Umgebung austritt.

Insbesondere in dem Ausführungsbeispiel der Fig. 3 sind die Temperatursensoren so im Maschinenraum angeordnet, dass die vor Übertemperatur zu schützenden Komponenten wie die Kupplung zwischen Motor und Maschine, die elektrischen Maschinenschütze und die Schwingungsdämpfer 23 auf Übertemperatur überwacht werden können. Insbesondere können daher mehr Temperatursensoren als im Ausführungsbeispiel der Fig. 3 dargestellt verwendet werden. Z.B. wird in diesem Fall zu jedem Zeitpunkt der höchste gemessene Temperaturwert der Motor-Maschinen-Kombination als Temperatur-Messwert für die Steuerung der zugeordneten Belüftungseinheit verwendet.

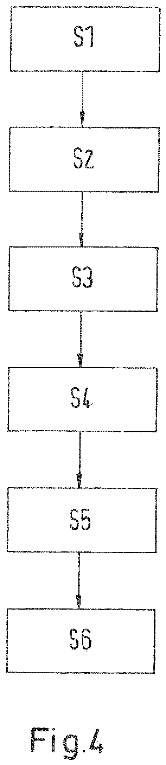

Im Folgenden wird ein Ausführungsbeispiel eines Verfahrens beschrieben, durch das Motoren für den Betrieb und damit für die Erzeugung elektrischer Leistung ausgewählt werden können. Dabei wird Bezug auf Fig. 4 genommen. In Schritt S1, zu Beginn des Betriebes eines Schienenfahrzeugs, werden zunächst sämtliche Verbrennungsmotoren der Anordnung gestartet, optional nacheinander, wie dies an sich aus dem Stand der Technik bekannt ist. In dem folgenden Schritt S2 wird ein Teil der Verbrennungsmotoren wieder abgeschaltet, da in der momentanen Betriebsphase lediglich ein Teillastbetrieb stattfinden soll. Alternativ werden nicht alle Verbrennungsmotoren in Schritt S1 gestartet, so dass in Schritt S2 kein Verbrennungsmotor wieder abgeschaltet wird oder weniger Verbrennungsmotoren wieder abgeschaltet werden. Insbesondere werden der oder die Verbrennungsmotoren, der/die noch nicht in Betrieb genommen worden ist/sind, in diesem Fall vorgewärmt.

In dem folgenden Schritt S3 werden die Temperaturen der abgeschalteten Verbrennungsmotoren überwacht. Wenn dabei festgestellt wird, dass die Temperatur eines der Verbrennungsmotoren unter einen vorgegebenen Temperaturgrenzwert fällt, wird der Motor (wieder) gestartet (Schritt S4), um eine Auskühlung mit anschließender Vorwärmung des Motors zu vermeiden.

In einer anschließenden Betriebsphase (Schritt S5), die alternativ auch vor oder während der Betriebsphase der Schritte S2 und S3 stattfinden kann, wird laufend die Temperatur zumindest einer der Verbrennungsmotor-Maschinen-Kombinationen überwacht und wird eine Belüftungseinrichtung zur Belüftung und somit Kühlung der zugeordneten Kombination lediglich dann betrieben, wenn ein vorgegebener Temperaturgrenzwert überschritten ist. Wenn ein weiterer Temperaturgrenzwert, der unterhalb des zuvor genannten Temperaturgrenzwertes liegt, unterschritten wird/ist, wird sogar während des Betriebes des zugeordneten Verbrennungsmotors auf einen Betrieb der zugeordneten Belüftungseinheit verzichtet, d.h. die Einheit bleibt abgeschaltet. Wenn der niedrigere vorgegebene Temperaturgrenzwert überschritten wird und der zugeordnete Verbrennungsmotor in Betrieb ist, wird die zugeordnete Belüftungseinheit betrieben (Schritt S6).

## Patentansprüche

1. Anordnung zum Versorgen eines Schienenfahrzeugs mit elektrischer Energie, wobei die Anordnung aufweist:
- zumindest zwei Verbrennungsmotoren (1),
- für die zumindest zwei Verbrennungsmotoren (1) jeweils eine zugeordnete elektrische Maschine (3) zum Erzeugen der elektrischen Energie, wobei die elektrische Maschine (3) mechanisch mit dem Verbrennungsmotor (1) gekoppelt ist, sodass sie bei einem Generator-Betrieb der elektrischen Maschine (3) von dem Verbrennungsmotor (1) angetrieben wird, sodass zumindest eine erste und eine zweite Verbrennungsmotor-Maschinen-Kombination gebildet ist,
- eine gemeinsame Steuerung (17) der Verbrennungsmotor-Maschinen-Kombinationen, wobei die Steuerung (17) ausgestaltet ist, die Verbrennungsmotoren (1) bei Bedarf einzeln zu starten,
- zumindest eine Vorwärmeinrichtung (KUL), die ausgestaltet ist, die Verbrennungsmotoren (1) vor einem Start vorzuwärmen,
- eine Temperatur-Ermittlungseinrichtung (19), die mit den Verbrennungsmotoren (1) thermisch gekoppelt ist und die über eine Signalverbindung mit der Steuerung (17) verbunden ist, um Informationen über Temperaturen der Verbrennungsmotoren (1) an die Steuerung (17) zu übermitteln,
wobei die Steuerung (17) ausgestaltet ist, während eines Betriebes eines der Verbrennungsmotoren (1) einen anderen der Verbrennungsmotoren (1) zu starten, wenn aufgrund einer Abkühlung des anderen Verbrennungsmotors eine von der Temperatur-Ermittlungseinrichtung ermittelte Temperatur des anderen Verbrennungsmotors einen ersten vorgegebenen Temperaturgrenzwert erreicht oder unterschreitet und der andere Verbrennungsmotor deswegen vor Auskühlung bedroht ist,
wobei die Steuerung ausgestaltet ist zu ermitteln, wie viele der Verbrennungsmotoren (1) während eines Betriebszeitraumes des Schienenfahrzeugs gleichzeitig zu betreiben sind, wobei bei der Auswahl der zu betreibenden Verbrennungsmotoren (1) berücksichtigt wird, ob ein oder mehrere der Verbrennungsmotoren vor Auskühlung bedroht sind, und wobei einer der Verbrennungsmotoren (1), der vor Auskühlung bedroht ist, bevorzugt ausgewählt und somit gestartet wird,
ein Schema vorgegeben ist, gemäß dem unter Berücksichtigung des momentanen Betriebszustandes der Anordnung mit mehreren Verbrennungsmotoren und unter Berücksichtigung der momentanen Anforderungen an die Anordnung die momentan für die Erzeugung von elektrischer Energie zu nutzenden Verbrennungsmotoren auswählen sind, wobei die Steuerung ausgestaltet ist, wenn Voraussetzungen für den Start eines vor Auskühlung bedrohten Verbrennungsmotors vorliegen, die gemäß dem Schema vorzunehmende Auswahl abzuändern, indem der vor Auskühlung bedrohte Verbrennungsmotor gestartet wird, und
gemäß dem Schema eine statische Priorisierung bei der Auswahl der Verbrennungsmotoren für den Betrieb durchgeführt wird, bei der die statische Priorisierung nach langfristigen, langsam ändernden Kriterien stattfindet, und wobei auch eine dynamische Priorisierung bei der Auswahl vorgenommen wird, nach kurzfristigen Kriterien, die höher als die Kriterien der statischen Priorisierung gewichtet sind, wobei der Start eines vor Auskühlung bedrohten Verbrennungsmotors ein kurzfristiges Kriterium ist.

2. Anordnung nach dem vorhergehenden Anspruch, wobei die Steuerung (17) den anderen Verbrennungsmotor bei Erreichen oder Unterschreiten des ersten vorgegebenen Temperaturgrenzwertes startet, obwohl eine Motorleistung des Verbrennungsmotors oder der Verbrennungsmotoren, die bereits in Betrieb sind, für die Versorgung des Schienenfahrzeugs mit elektrischer Energie ausreicht.

3. Anordnung nach dem vorhergehenden Anspruch, wobei die Steuerung (17) die Motorleistung des bereits in Betrieb befindlichen Verbrennungsmotors oder der bereits in Betrieb befindlichen Verbrennungsmotoren reduziert, sobald der andere Verbrennungsmotor gestartet ist und zu einer Gesamt-Motorleistung sämtlicher in Betrieb befindlicher Verbrennungsmotoren beiträgt.

4. Anordnung nach einem der vorhergehenden Ansprüche, wobei die Anordnung eine Belüftungseinrichtung zum Belüften und somit zum Kühlen der Motor-Maschinen-Kombinationen aufweist, wobei jeder der Motor-Maschinen-Kombinationen eine von mehreren Belüftungseinheiten (27) der Belüftungseinrichtung zugeordnet ist, so dass die Belüftungseinheiten (27) während ihres Betriebes hauptsächlich oder ausschließlich jeweils die ihr zugeordnete Motor-Maschinen-Kombination (1, 3) kühlen, wobei jede der Motor-Maschinen-Kombinationen (1, 3) mit jeweils zumindest einem Temperatursensor (25) kombiniert ist und wobei die Belüftungseinheiten (27) trotz des Betriebes des Schienenfahrzeugs jeweils nur dann eingeschaltet sind, wenn der Verbrennungsmotor (1) der ihr zugeordneten Motor-Maschinen-Kombination (1, 3) in Betrieb ist und wenn ein Temperatur-Messwert des Temperatursensors (25) oder der Temperatursensoren der ihr zugeordneten Motor-Maschinen-Kombination (1, 3) ein Temperatur-Kriterium erfüllt, nämlich entweder größer als der zweite vorgegebene Temperaturgrenzwert ist oder größer als oder gleich dem zweiten vorgegebenen Temperaturgrenzwert ist.

5. Schienenfahrzeug, aufweisend eine Anordnung nach einem der Ansprüche 1-4.

6. Verfahren zum Betreiben einer Anordnung zum Versorgen eines Schienenfahrzeugs mit elektrischer Energie, wobei:
- bei Bedarf zumindest zwei Verbrennungsmotoren (1) der Anordnung gleichzeitig betrieben werden,
- für die Erzeugung der elektrischen Energie jeweils eine elektrische Maschine (3) genutzt wird, die mechanisch mit dem Verbrennungsmotor (1) gekoppelt ist, sodass sie bei einem Generator-Betrieb der elektrischen Maschine (3) von dem Verbrennungsmotor (1) angetrieben wird und sodass zumindest eine erste und eine zweite Verbrennungsmotor-Maschinen-Kombination gebildet ist,
- die Verbrennungsmotoren (1) optional bei Bedarf vor einem Start vorgewärmt werden,
- Informationen über ermittelte Temperaturen der Verbrennungsmotoren an eine Steuerung (17) der Anordnung übermittelt werden,
wobei die Steuerung (17) während eines Betriebes eines der Verbrennungsmotoren einen anderen der Verbrennungsmotoren startet, wenn aufgrund einer Abkühlung des anderen Verbrennungsmotors eine ermittelte Temperatur des anderen Verbrennungsmotors einen ersten vorgegebenen Temperaturgrenzwert erreicht oder unterschreitet und der andere Verbrennungsmotor deswegen vor Auskühlung bedroht ist,
wobei die Steuerung ermittelt, wie viele der Verbrennungsmotoren (1) während eines Betriebszeitraumes des Schienenfahrzeugs gleichzeitig zu betreiben sind, wobei bei der Auswahl der zu betreibenden Verbrennungsmotoren (1) berücksichtigt wird, ob ein oder mehrere der Verbrennungsmotoren vor Auskühlung bedroht sind und wobei einer der Verbrennungsmotoren (1), der vor Auskühlung bedroht ist, bevorzugt ausgewählt und somit gestartet wird,
ein Schema vorgegeben ist, gemäß dem unter Berücksichtigung des momentanen Betriebszustandes der Anordnung mit mehreren Verbrennungsmotoren und unter Berücksichtigung der momentanen Anforderungen an die Anordnung die momentan für die Erzeugung von elektrischer Energie zu nutzenden Verbrennungsmotoren auswählen sind, und wobei, wenn die Voraussetzungen für den Start eines vor Auskühlung bedrohten Verbrennungsmotors vorliegen, die gemäß dem Schema vorzunehmende Auswahl abgeändert wird, indem der vor Auskühlung bedrohte Verbrennungsmotor gestartet wird, und
gemäß dem Schema eine statische Priorisierung bei der Auswahl der Verbrennungsmotoren für den Betrieb durchgeführt wird, bei der die statische Priorisierung nach langfristigen, langsam ändernden Kriterien stattfindet, und wobei auch eine dynamische Priorisierung bei der Auswahl vorgenommen wird, nach kurzfristigen Kriterien, die höher als die Kriterien der statischen Priorisierung gewichtet sind, wobei der Start eines vor Auskühlung bedrohten Verbrennungsmotors ein kurzfristiges Kriterium ist.

7. Verfahren nach dem Anspruch 6, wobei die Steuerung (17) den anderen Verbrennungsmotor bei Erreichen oder Unterschreiten des vorgegebenen Temperaturgrenzwertes startet, obwohl eine Motorleistung des Verbrennungsmotors oder der Verbrennungsmotoren, die bereits in Betrieb sind, für die Versorgung des Schienenfahrzeugs mit elektrischer Energie ausreicht.

8. Verfahren nach Anspruch 6 oder 7, wobei die Steuerung (17) die Motorleistung des bereits in Betrieb befindlichen Verbrennungsmotors oder der bereits in Betrieb befindlichen Verbrennungsmotoren reduziert, sobald der andere Verbrennungsmotor gestartet ist und zu einer Gesamt-Motorleistung sämtlicher in Betrieb befindlicher Verbrennungsmotoren beiträgt.

9. Verfahren nach einem der Ansprüche 6 bis 8, wobei jede der Motor-Maschinen-Kombinationen bei Bedarf von einer ihr zugeordneten Belüftungseinheit belüftet und somit gekühlt wird, so dass die Belüftungseinheiten (27) während ihres Betriebes hauptsächlich oder ausschließlich jeweils die ihr zugeordnete Motor-Maschinen-Kombination kühlen, wobei für jede der Motor-Maschinen-Kombinationen eine Temperatur gemessen wird und wobei die Belüftungseinheiten (27) trotz des Betriebes des Schienenfahrzeugs jeweils nur dann eingeschaltet sind, wenn der Verbrennungsmotor der ihr zugeordneten Motor-Maschinen-Kombination in Betrieb ist und wenn ein Temperatur-Messwert des Temperatursensors oder der Temperatursensoren der ihr zugeordneten Motor-Maschinen-Kombination ein Temperatur-Kriterium erfüllt, nämlich entweder größer als der zweite vorgegebene Temperaturgrenzwert ist oder größer als oder gleich dem zweiten vorgegebenen Temperaturgrenzwert ist.
